# EUROPEAN PATENT APPLICATION

(11) **EP 4 821 883 A1**
(43) Date of publication of application: **14.10.2026**
(21) Application number: 25715451.8
(22) Date of filing: 21.02.2025
(51) Int. Cl.: C01B 25/30, C01D 5/16, C01D 5/00, C02F 9/00, C02F 1/04, C02F 1/28, C02F 1/58, C02F 1/66, C02F 1/22, C02F 1/00, C02F 1/38, C02F 101/10

(54) **RESOURCE UTILIZATION METHOD AND DEVICE FOR LITHIUM-CONTAINING MOTHER LIQUOR**

(30) Priority: 19.02.2025 CN 202510186003
(71) Applicant: Hubei Wanrun New Energy Technology Co., Ltd., Shiyan, Hubei 442500 (CN)
(72) Inventor: XIAO, Zhenglin, Shiyan, Hubei 442500 (CN); PENG, Tangping, Shiyan, Hubei 442500 (CN)
(74) Representative: Manitz Finsterwald Patent- und Rechtsanwaltspartnerschaft mbB
(86) International application number: PCT/CN2025/078431
(87) International publication number: WO 2026/174518

(57) **Abstract**

The present disclosure provides a resource utilization method for a lithium-containing mother liquor and a resource utilization device for a lithium-containing mother liquor. The resource utilization method for the lithium-containing mother liquor includes the following steps: providing a lithium-containing mother liquor containing lithium ions and sulfate ions; mixing the lithium-containing mother liquor with a phosphate salt solution followed by a lithium precipitation treatment to obtain a lithium-containing slurry; subjecting the lithium-containing slurry to a solid-liquid separation treatment to obtain a pre-adsorption liquid and a first solid material; adsorbing the lithium ions in the pre-adsorption liquid with a titanium-based adsorbent to obtain a post-adsorption liquid; and subjecting the post-adsorption liquid to a concentration and crystallization treatment; wherein an amount-of-substance ratio of the lithium ions in the lithium-containing mother liquor to phosphate ions in the phosphate salt solution is 3:(0.7 to 0.8). The resource utilization method for the lithium-containing mother liquor can improve the lithium recovery rate and a purity of the recovered product.

## Description

### TECHNICAL FIELD

The present disclosure relates to the technical field of lithium ion batteries, in particular to a resource utilization method for a lithium-containing mother liquor and a resource utilization system for a lithium-containing mother liquor.

### BACKGROUND

A lithium precipitation mother liquor refers to a lithium-containing mother liquor that is generated following the extraction of a lithium salt from a lithium ore or that is derived from a waste lithium iron phosphate battery. The lithium precipitation mother liquor not only contains a certain amount of lithium ions but also a large amount of impurities such as carbonate ions, sulfate ions, aluminum ions, calcium ions, and sodium ions. The lithium content in the lithium precipitation mother liquor constitutes over 20% of the total lithium available in the entire circulation process for lithium extraction materials, making it essential to recover lithium ions from the lithium precipitation mother liquor.

Some conventional technologies have proposed using adsorption with adsorbents to recover lithium ions from the lithium precipitation mother liquor. However, the lithium adsorption rate of such extraction method typically ranges from only 85% to 90%. Additionally, the adsorbents are gradually consumed during use, leading to higher costs and the need for larger adsorption equipment. Some other conventional technologies have proposed adding a solid phosphate salt to the lithium precipitation mother liquor to form lithium phosphate precipitate for lithium recovery. Such extraction method requires the addition of excess phosphate salt to maximize lithium recovery, yet the recovery rate for lithium element can only reach 70% to 80%. Furthermore, the resulting lithium phosphate precipitate often contains a significant amount of impurities, and the low concentration of lithium element in the residual liquid makes further recovery challenging.

In view of the above, further research is needed to develop a resource utilization method for a lithium-containing mother liquor and a resource utilization device for a lithium-containing mother liquor.

### SUMMARY

In view of the technical issues mentioned in the background, the present disclosure provides a resource utilization method for a lithium-containing mother liquor and a resource utilization device for a lithium-containing mother liquor, which facilitate improvements of the lithium recovery rate and the purity of the recovered product.

The embodiments of the present disclosure provide a resource utilization method for a lithium-containing mother liquor, including the following steps:
providing a lithium-containing mother liquor containing lithium ions and sulfate ions;
mixing the lithium-containing mother liquor with a phosphate salt solution followed by a lithium precipitation treatment to obtain a lithium-containing slurry;
subjecting the lithium-containing slurry to a solid-liquid separation treatment to obtain a pre-adsorption liquid and a first solid material;
adsorbing the lithium ions in the pre-adsorption liquid with an adsorbent to obtain a post-adsorption liquid; and
subjecting the post-adsorption liquid to a concentration and crystallization treatment to obtain a second solid material;
wherein an amount-of-substance ratio of the lithium ions in the lithium-containing mother liquor to the phosphate ions in the phosphate salt solution is 3:(0.7 to 0.8).

In the resource utilization method for the lithium-containing mother liquor, the lithium-containing mother liquor is firstly mixed with the phosphate salt solution, during which a feeding ratio of lithium ions to phosphate ions is controlled at 3:(0.7 to 0.8). With such a feeding ratio, the amount of phosphate ions is low, which is beneficial to better addressing peritectic issues and for enhancing the purity of the lithium phosphate in the first solid material while precipitating a substantial amount of lithium ions. Furthermore, the lithium precipitation treatment consumes most of the lithium ions in the lithium-containing mother liquor, which effectively mitigates the problem of reduced alkalinity during subsequent adsorption process and significantly enhances the adsorption capacity of the adsorbent for lithium ions. Following the lithium precipitation treatment and the adsorption of lithium ions as described above, over 99% of the lithium ions in the lithium-containing mother liquor are recovered, with less impurities remaining in the post-adsorption liquid. The purity of the sulfate salt material obtained from the concentration and crystallization treatment on the post-adsorption liquid is relatively high.

In some embodiments of the present disclosure, the lithium-containing mother liquor is added to the phosphate salt solution during mixing the lithium-containing mother liquor with the phosphate salt solution.

In these embodiments, the reverse feeding method where the lithium-containing mother liquor is added to the phosphate salt solution is beneficial to preventing the peritectic issues and facilitates the lithium ions to be more fully precipitated, thereby improving the purity of the lithium phosphate in the first solid material and the recovery rate of the lithium ions.

In some embodiments of the present disclosure, the lithium-containing mother liquor is added to the phosphate salt solution within 0.5 h to 4 h.

In these embodiments, the addition of the lithium-containing mother liquor to the phosphate salt solution within 0.5 h to 4 h is beneficial to the full crystallization and growth of the lithium phosphate which improves the purity of the lithium phosphate in the obtained first solid material.

In some embodiments of the present disclosure, the phosphate salt in the phosphate salt solution includes sodium dihydrogen phosphate, disodium hydrogen phosphate, or a combination thereof.

In these embodiments, since sodium dihydrogen phosphate or disodium hydrogen phosphate has a high solubility, the use of sodium dihydrogen phosphate or disodium hydrogen phosphate as a solute in the phosphate salt solution is beneficial to reducing the required volume of the phosphate salt solution and reducing the dilution for lithium ions in the feeding process, thereby facilitating the full precipitation of lithium ions. Furthermore, sodium dihydrogen phosphate or disodium hydrogen phosphate can further produce hydrogen ions, which is beneficial to adjusting the pH value after the lithium precipitation reaction within an appropriate range, thereby reducing or avoiding the use of an additional acid-base regulator.

In some embodiments of the present disclosure, the phosphate salt solution is a saturated solution of phosphate ions.

In these embodiments, as compared to an unsaturated solution, by using the phosphate salt in form of the saturated solution of phosphate ions, the lithium ions can be precipitated by combining with the phosphate ions more quickly and more fully, which is beneficial to obtaining a higher recovery rate for lithium ions and a higher resource utilization efficiency.

In some embodiments of the present disclosure, after the solid-liquid separation treatment, the method further includes a step of washing the first solid material with a washing liquid.

In some embodiments of the present disclosure, before mixing the lithium-containing mother liquor with the phosphate salt solution, the lithium-containing mother liquor is heated to 80 °C to 100 °C; and/or,
a temperature of the lithium precipitation treatment is 80 °C to 100 °C, and a temperature-holding time of the lithium precipitation treatment is 2 h to 4 h.

In these embodiments, by heating the lithium-containing mother liquor to 80 °C to 100 °C and controlling the temperature of the lithium precipitation treatment at 80 °C to 100 °C, it is beneficial to the quick and full precipitation of the lithium ions in the lithium-containing mother liquor with the phosphate ions and for improving the resource utilization efficiency and the recovery rate of lithium ions. By controlling the temperature-holding time to be 2 h to 4 h, it is beneficial to further improving the purity of the lithium phosphate in the obtained first solid material.

In some embodiments of the present disclosure, a pH value of the pre-adsorption liquid is 9.5 to 10.5.

In these embodiments, by using the pre-adsorption liquid with the pH value of 9.5 to 10.5, a sufficient alkalinity is provided for the adsorption of lithium ions by the adsorbent, so that the lithium ions can be fully adsorbed, and it is beneficial to preventing the dissolved loss problem of the adsorbent in the adsorption process to improve the service life of the adsorbent.

In some embodiments of the present disclosure, a concentration of lithium ions in the pre-adsorption liquid is 200 ppm to 500 ppm, and a concentration of lithium ions in the post-adsorption liquid is less than 20 ppm.

In these embodiments, by controlling the concentration of lithium ions in the pre-adsorption liquid to be 200 ppm to 500 ppm and the concentration of lithium ions in the post-adsorption liquid to be less than 20 ppm, it is beneficial to the full adsorption of lithium ions by the adsorbent and for the control of the loss of the adsorbent to reduce the usage cost of the adsorbent.

In some embodiments of the present disclosure, the adsorbent includes a titanium-based adsorbent. After adsorbing lithium ions in the pre-adsorption liquid with the adsorbent, the method further includes: subjecting the adsorbent to a desorption treatment with an acid solution.

In these embodiments, after subjecting the adsorbent to the desorption treatment with the acid solution, a lithium solution enriched with lithium ions is produced, which is beneficial to a further recovery and utilization of lithium element.

In some embodiments of the present disclosure, the phosphate salt solution contains sodium ions. Before subjecting the post-adsorption liquid to the concentration and crystallization treatment, the method also includes: adjusting a pH value of the post-adsorption liquid to 5.0 to 6.0. The step of subjecting the post-adsorption liquid to the concentration and crystallization treatment includes: sequentially subjecting the post-adsorption liquid to an evaporative concentration treatment and a freeze crystallization treatment to obtain the second solid material and a post-crystallization liquid; and subjecting the second solid material to a drying treatment to obtain a sodium sulphate powder.

In these embodiments, by adjusting the pH value of the post-adsorption liquid, it is beneficial to improving the purity of sodium sulfate in the second solid material. By the evaporative concentration treatment and the freeze crystallization treatment sequentially performed, it is beneficial to improving the recovery rate of the sodium sulphate powder.

In some embodiments of the present disclosure, the method further includes: preparing the post-crystallization liquid into a phosphate salt solution which is reused in the step of mixing the lithium-containing mother liquor with the phosphate salt solution.

In these embodiments, lithium ions and sulfate ions have been substantially removed from the post-crystallization liquid, leaving primarily a small amount of phosphate ions in the post-crystallization liquid. Thus, recovering these phosphate ions for use in the phosphate salt solution is beneficial to the full utilization of phosphate ions without affecting the recovery rates of lithium ions and sulfate ions, thereby reducing the resource utilization costs.

In some embodiments of the present disclosure, the concentration of lithium ions in the lithium-containing mother liquor is 1450 ppm to 2700 ppm; and/or,
the lithium-containing mother liquor is selected from a lithium precipitation mother liquor derived from a waste lithium iron phosphate battery or a lithium precipitation mother liquor produced by a lithium extraction from a lithium ore.

In these embodiments, the resource utilization method is used for the recovery of specific lithium-containing mother liquor, which has low raw material costs and high recovery efficiency, allows for the full recovery of residual lithium ions from specific the lithium-containing mother liquor, and provides significant economic benefits.

The present disclosure further provides a resource utilization device for a lithium-containing mother liquor. The resource utilization device includes: a lithium precipitation reactor, a solid-liquid separator, an adsorber, an evaporator, and a cooling crystallizer. An outlet port of the lithium precipitation reactor is connected to an inlet port of the solid-liquid separator. An outlet port of the solid-liquid separator is connected to an inlet port of the adsorber. The adsorber is provided with an adsorbent therein. An outlet port of the adsorber is connected to an inlet port of the evaporator. An outlet port of the evaporator is connected to an inlet port of the cooling crystallizer.

The resource utilization device for the lithium-containing mother liquor is used to implement the resource utilization method for the lithium-containing mother liquor as described in the above embodiments.

The above description is only an overview of the technical solution of the present disclosure. In order to better understand the technical means of the present disclosure so that it can be implemented in accordance with the contents of the description, and in order to make the above and further purposes, features, and advantages of the present disclosure more apparent and understandable, the specific embodiments of the present disclosure are illustrated below.

### BRIEF DESCRIPTION OF THE DRAWINGS

In order to illustrate the technical solutions of the present disclosure more clearly, the drawings used in the present disclosure will be described briefly below. Apparently, the following described drawings are merely some embodiments of the present disclosure, and other drawings can be derived by persons of ordinary skill in the art based on the accompany drawings without any creative effort.
FIG. 1 is a schematic diagram showing steps of a resource utilization method for a lithium-containing mother liquor according to the present disclosure; and
FIG. 2 is a process flow chart of the resource utilization method for the lithium-containing mother liquor according to the present disclosure.

### DETAILED DESCRIPTION

Embodiments of technical solutions of the present disclosure will now be described in detail in conjunction with the accompanying drawings. The following embodiments are only for illustrating the technical solutions of the present disclosure more clearly, therefore only used as examples, and they cannot be construed as limiting the protection scope of the present disclosure.

Unless otherwise defined, all technical and scientific terms used herein have the same meaning as commonly understood by persons skilled in the technical art to which the present disclosure pertains. The terms used herein are only for the purpose of describing specific embodiments and are not intended to limit the present disclosure. The terms "comprise" and "include" in the description and claims as well as the above description of drawings of the present disclosure are intended to cover non-exclusive inclusions.

In the description of the embodiments of the present disclosure, the technical terms such as "first" and "second" are only used to distinguish different objects, and cannot be understood as indicating or implying relative importance or implicitly indicating the quantity, particular order, or primary and secondary relationship of the indicated technical features. In the description of the embodiments of the present disclosure, the "plurality" means at least two, unless otherwise clearly and specifically defined.

When "embodiment" is mentioned herein, it means that a particular feature, structure, or characteristic described in conjunction with the embodiment can be included in at least one embodiment of the present disclosure. When appeared in various places in the description, the phrase does not necessarily refer to the same embodiment, nor be a separate or alternative embodiment mutually exclusive of other embodiments. It is explicitly and implicitly understood by persons skilled in the art that the embodiments described herein may be combined with other embodiments.

In the description of the embodiments of the present disclosure, the term "and/or" only describes the association relationship of associated objects, indicating that there can be three relationships. For example, A and/or B may represent three conditions: A alone, both A and B, and B alone. In addition, the character "/" herein generally indicates that the relationship between the former and latter objects is an "or" relationship.

In the description of the embodiments of the present disclosure, the term "a plurality of" refers to at least two (including two). Similarly, "a plurality of groups" refers to at least two groups (including two groups), and "a plurality of pieces" refers to at least two pieces (including two pieces).

In the description of the embodiments of the present disclosure, the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" etc. indicate the orientations or positional relationships on the basis of the drawings. These terms are only for the convenience of describing the present disclosure and simplifying the description, rather than indicating or implying that the related devices or elements must have the specific orientations, or be constructed or operated in the specific orientations, and therefore cannot be understood as limitations of the embodiments of the present disclosure.

In the description of the embodiments of the present disclosure, unless otherwise clearly specified and defined, the technical terms "installed", "connected", "coupled", "fixed" and the like should be understood broadly. For example, an element, when being referred to as being "installed", "connected", "coupled", or "fixed" to another element, unless otherwise specifically defined, can be fixedly connected, detachably connected, or integrated to the other element, can be mechanical connected or electrically connected to the other element, and can be directly connected to the other element, or connected to the other element via an intermediate medium, or can be internal communication between two elements or interaction between two elements. For persons skilled in the art, the specific meanings of the above terms in the embodiments of the present disclosure can be understood according to specific circumstances.

In the embodiments of the present disclosure, ppm indicates the ratio of the mass of the solute to the mass of the solution in parts per million.

In the embodiments of the present disclosure, unless otherwise specified, the solvents of "mother liquor", "solution", "post-adsorption liquid", "pre-adsorption liquid", "acid liquid", "post-crystallization liquid", and the like are each independently selected from secondary water, deionized water, distilled water, pure water, ultrapure water, or a combination thereof.

The present disclosure provides a resource utilization method for a lithium-containing mother liquor, including the following steps:
providing a lithium-containing mother liquor containing lithium ions and sulfate ions;
mixing the lithium-containing mother liquor with a phosphate salt solution followed by a lithium precipitation treatment to obtain a lithium-containing slurry;
subjecting the lithium-containing slurry to a solid-liquid separation treatment to obtain a pre-adsorption liquid and a first solid material;
adsorbing the lithium ions in the pre-adsorption liquid with a titanium-based adsorbent to obtain a post-adsorption liquid; and
subjecting the post-adsorption liquid to a concentration and crystallization treatment;
wherein an amount-of-substance ratio of the lithium ions in the lithium-containing mother liquor to the phosphate ions in the phosphate salt solution is 3:(0.7 to 0.8).

In the resource utilization method for the lithium-containing mother liquor, the lithium-containing mother liquor is firstly mixed with the phosphate salt solution, during which a feeding ratio of lithium ions to phosphate ions is controlled at 3:(0.7 to 0.8). With such a feeding ratio, the lower amount of phosphate ions is lower, which is beneficial to better addressing peritectic issues and for enhancing the purity of the lithium phosphate in the first solid material while precipitating a substantial amount of lithium ions. If the amount of phosphate ions is greater than 0.8, not only the costs of the resource utilization would be increased, but also an excess amount of phosphate ions would be introduced into the pre-adsorption liquid, which is unbeneficial to the subsequent adsorption, concentration, and crystallization. Furthermore, the lithium precipitation treatment consumes most of the lithium ions in the lithium-containing mother liquor, which effectively mitigates the problem of reduced alkalinity during subsequent adsorption process and significantly enhances the adsorption capacity of the adsorbent for lithium ions. Following the lithium precipitation treatment and the adsorption of lithium ions as described above, over 99% of the lithium ions in the lithium-containing mother liquor are recovered, with less impurities remaining in the post-adsorption liquid. The purity of the sulfate salt material obtained from the concentration and crystallization treatment on the post-adsorption liquid is relatively high.

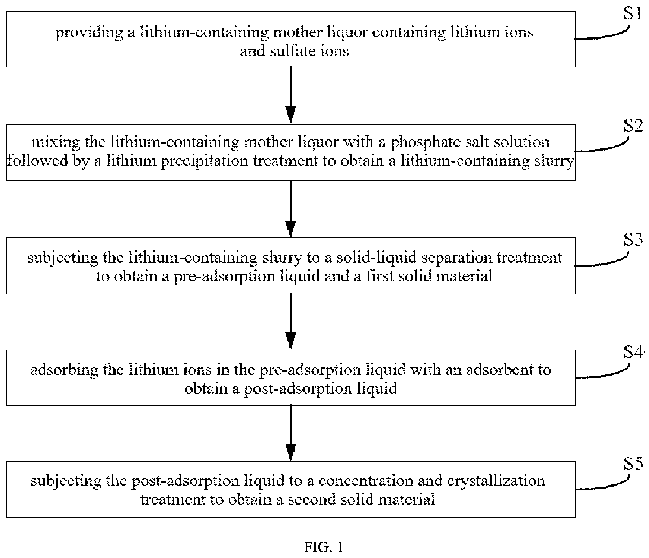

FIG. 1 is a schematic diagram showing steps of the resource utilization method for the lithium-containing mother liquor of the present disclosure. Referring to FIG. 1, the resource utilization method for the lithium-containing mother liquor includes the following steps S1 to S5, specifically:
Step S1, providing a lithium-containing mother liquor containing lithium ions and sulfate ions.

As an example of this embodiment, a concentration of lithium ions in the lithium-containing mother liquor is 1450 ppm to 2700 ppm. For example, the concentration of lithium ions in the lithium-containing mother liquor may be 1450 ppm, 1500 ppm, 1600 ppm, 1800 ppm, 2000 ppm, 2200 ppm, 2400 ppm, 2500 ppm, 2600 ppm, or 2700 ppm, or the concentration of lithium ions in the lithium-containing mother liquor may be between any two of the above concentrations.

As an example of this embodiment, a concentration of sulfate ions in the lithium-containing mother liquor is 80 g/L to 105 g/L. For example, the concentration of sulfate ions in the lithium-containing mother liquor may be 80 g/L, 85 g/L, 90 g/L, 95 g/L, 100 g/L, or 105 g/L, or the concentration of sulfate ions in the lithium-containing mother liquor may be between any two of the above concentrations.

In this example, the resource utilization method is used for the recovery of specific lithium-containing mother liquor, which has low raw material costs and high recovery efficiency, allows for the full recovery of residual lithium ions from the specific lithium-containing mother liquor, and provides significant economic benefits.

As an example of this embodiment, the lithium-containing mother liquor is selected from a lithium precipitation mother liquor derived from waste lithium iron phosphate batteries or a lithium precipitation mother liquor produced by lithium extraction from lithium ore. As a further example, the lithium precipitation mother liquor derived from waste lithium iron phosphate batteries refers to a solution obtained after the precipitation of lithium ions and the solid-liquid separation during the recovering process of the waste lithium iron phosphate batteries. The lithium precipitation mother liquor produced by lithium extraction from lithium ore refers to a solution obtained after the precipitation of lithium ions and the solid-liquid separation during lithium extraction from lithium ore. A product of the above precipitation of lithium ions is typically lithium carbonate. The precipitation of lithium ions in the above precipitation process is not complete, resulting in a certain amount of lithium ions remaining in the lithium precipitation mother liquor. Additionally, the above lithium precipitation mother liquor often contains a significant amount of sulfate ions. The resource utilization method for the lithium-containing mother liquor of the present disclosure is applicable to recover and recycle the lithium ions in both types of lithium precipitation mother liquors. In some other embodiments, the resource utilization method for the lithium-containing mother liquor of the present disclosure is applicable to recover and recycle lithium ions from other lithium-containing mother liquors with similar components.

Step S2, mixing the lithium-containing mother liquor with a phosphate salt solution followed by a lithium precipitation treatment to obtain a lithium-containing slurry.

In this embodiment, an amount-of-substance ratio of the lithium ions in the lithium-containing mother liquor to the phosphate ions in the phosphate salt solution is 3:(0.7 to 0.8). Optionally, the amount-of-substance ratio of the lithium ions in the lithium-containing mother liquor to the phosphate ions in the phosphate salt solution may be 3:0.7, 3:0.72, 3:0.74, 3:0.76, 3:0.78, or 3:0.8. With such a feeding ratio, the amount of phosphate ions is lower, which is beneficial to better addressing peritectic issues and for enhancing the purity of the lithium phosphate in the first solid material while precipitating a substantial amount of lithium ions. If the amount of phosphate ions is higher (for example, with an amount-of-substance of lithium ions in the lithium-containing mother liquor to phosphate ions in the phosphate salt solution of 3:0.9, 3:1, 3:2, etc.), the improvement in the recovery rate of lithium ions is minimal, whereas not only the material costs would be increased, but also an excessive amount of phosphate ions would be introduced into the solution, which negatively impacts the purity of the material obtained in the subsequent concentration and crystallization step. If the amount of phosphate ions is lower (for example, with an amount-of-substance of lithium ions in the lithium-containing mother liquor to phosphate ions in the phosphate salt solution of 3:0.4, 3:5, 3:6, etc.), the yield of the solid lithium phosphate material is relatively low, while the concentration of lithium ions in the lithium-containing slurry remains high, which is not conducive to the subsequent adsorption step.

As an example of this embodiment, the step of mixing the lithium-containing mother liquor with the phosphate salt solution may be performed in a reaction vessel.

As an example of this embodiment, in the step of mixing the lithium-containing mother liquor with the phosphate salt solution, the lithium-containing mother liquor is added to the phosphate salt solution.

In conventional technologies, the phosphate salt solid or the phosphate salt solution is typically directly added to the lithium-containing mother liquor. Such a forward feeding method tends to cause peritectic issues in lithium phosphate and an increase in consumption of the phosphate salt, with a low recovery rate of lithium ions. In this embodiment, the reverse feeding method where the lithium-containing mother liquor is added to the phosphate salt solution is beneficial to preventing the peritectic issues and facilitates the lithium ions to be more fully precipitated, thereby further improving the purity of the lithium phosphate in the first solid material and the recovery rate of the lithium ions.

As a further example of this embodiment, the lithium-containing mother liquor is added to the phosphate salt solution within 0.5 h to 4 h. It should be understood that the lithium-containing mother liquor may be added to the phosphate salt solution in batches or continuously.

In this embodiment, the addition of the lithium-containing mother liquor to the phosphate salt solution within 0.5 h to 4 h is beneficial to the full crystallization and growth of the lithium phosphate which improves the purity of the lithium phosphate in the obtained first solid material.

As an example of the embodiment, the phosphate salt in the phosphate salt solution includes sodium dihydrogen phosphate, disodium hydrogen phosphate, or a combination thereof. It should be understood that in other embodiments, the phosphate salt in the phosphate salt solution may be other soluble phosphate salts, such as sodium phosphate.

In this embodiment, since sodium dihydrogen phosphate or disodium hydrogen phosphate has a high solubility, the use of sodium dihydrogen phosphate or disodium hydrogen phosphate as a solute in the phosphate salt solution is beneficial to reducing the required volume of the phosphate salt solution and reducing the dilution for lithium ions in the feeding process, thereby facilitating the full precipitation of lithium ions. Furthermore, sodium dihydrogen phosphate or disodium hydrogen phosphate can further produce hydrogen ions, which is beneficial to adjusting the pH value after the lithium precipitation reaction within an appropriate range, thereby reducing or avoiding the use of an additional acid-base regulator.

As an example of this embodiment, the phosphate salt solution is a saturated solution of phosphate ions.

In this embodiment, as compared to an unsaturated solution, by using the phosphate salt in form of the saturated solution of phosphate ions, the lithium ions can be precipitated by combining with the phosphate ions more quickly and more fully, which is beneficial to obtaining a higher recovery rate of lithium ions and a higher resource utilization efficiency.

As an example of this embodiment, before mixing the lithium-containing mother liquor with the phosphate salt solution, the lithium-containing mother liquor is heated to 80 °C to 100 °C, preferably 90 °C to 95 °C. For example, the lithium-containing mother liquor may be heated to 85 °C, 90 °C, 91 °C, 92°C, 93 °C, 94 °C, or 95°C, or the lithium-containing mother liquor may be heated to a temperature between any two of the above temperatures. Heating the lithium-containing mother liquor to 80 °C to 100 °C, preferably 90 °C to 95 °C, is more beneficial to promoting the formation of the lithium phosphate precipitate. By firstly heating the lithium-containing mother liquor to 80 °C to 100 °C, preferably 90 °C to 95 °C, it is beneficial to lithium ions in the lithium-containing mother liquor to combine with phosphate ions more quickly to form the precipitate during the lithium precipitation treatment, and is beneficial to improving the production efficiency and the recovery rate of lithium ions.

As a further example of this embodiment, in order to fully precipitate lithium ions, it is usually necessary to perform the lithium precipitation treatment at the temperature of 80 °C to 100 °C, preferably 90 °C to 95 °C. Therefore, heating the lithium-containing mother liquor to 90° C to 95 °C before mixing the lithium-containing mother liquor with the phosphate salt solution is beneficial to reducing a heating time during the lithium precipitation process, thereby improving the production efficiency.

As an example of the embodiment, during the lithium precipitation treatment, the temperature of the lithium precipitation treatment is 80 °C to 100 °C, preferably 90 °C to 95 °C, and a temperature-holding time of the lithium precipitation treatment is 2 h to 4 h. For example, the temperature of the lithium precipitation treatment is 85 °C, 90 °C, 91 °C, 92 °C, 93 °C, 94 °C or 95 °C, or the temperature of the lithium precipitation treatment may be between any two of the above temperatures. For another example, the temperature-holding time of the lithium precipitation treatment is 2 h, 2.5 h, 3 h, 3.5 h, 4 h, or the temperature-holding time of the lithium precipitation treatment may be between any two of the above temperatures.

In this embodiment, by heating the lithium-containing mother liquor to 80 °C to 100 °C, preferably 90 °C to 95 °C, and controlling the temperature of the lithium precipitation treatment at 80 °C to 100 °C, preferably 90 °C to 95 °C, it is beneficial to the quick and full precipitation of the lithium ions in the lithium-containing mother liquor with the phosphate ions and for improving the resource utilization efficiency and the recovery rate of lithium ions. By controlling the temperature-holding time to be 2 h to 4 h, it is beneficial to full crystallization and crystal growth of lithium phosphate, thereby further improving the purity of the lithium phosphate in the obtained first solid material.

After the reaction process in step S2, the main component in the solid phase component in the formed lithium-containing slurry is the lithium phosphate precipitate, and the liquid phase component contains residual lithium ions and sulfate ions.

In step S3, subjecting the lithium-containing slurry to a solid-liquid separation treatment to obtain a pre-adsorption liquid and a first solid material.

As an example of this embodiment, the step of the solid-liquid separation treatment may be performed in a solid-liquid separator. Furthermore, depending on the actual separation method, the solid-liquid separator may include a filter press, a centrifuge, a suction filter, or a sedimentation tank. In this embodiment, a plate-and-frame filter press may be used to separate the pre-adsorption liquid from the first solid material.

As an example of this embodiment, the method of the solid-liquid separation is filtration, such as pressure filtration or suction filtration. In other embodiments, the method of the solid-liquid separation may be centrifugation or static sedimentation. The obtained solid phase material after the solid-liquid separation is used as the first solid material, and the obtained liquid phase material after the solid-liquid separation is used as the pre-adsorption liquid containing residual lithium ions and sulfate ions.

As an example of this embodiment, the concentration of lithium ions in the pre-adsorption liquid is 200 ppm to 500 ppm. For example, the concentration of lithium ions in the pre-adsorption liquid may be 200 ppm, 250 ppm, 300 ppm, 350 ppm, 400 ppm, 450 ppm, or 500 ppm, or the concentration of lithium ions in the pre-adsorption liquid may be between any two of the above concentrations.

In this embodiment, by controlling the concentration of lithium ions in the pre-adsorption liquid to be 200 ppm to 500 ppm and the concentration of lithium ions in the post-adsorption liquid to be less than 20 ppm, it is beneficial to the full adsorption of lithium ions by the adsorbent and for the control of the loss of the adsorbent to reduce the usage cost of the adsorbent.

As an example of this embodiment, a pH value of the pre-adsorption liquid is 9.5 to 10.5.

The titanium-based adsorbent has dissolved loss problem when exposed to a solution with a pH value greater than 11.5. In this embodiment, by using the pre-adsorption liquid with the pH value of 9.5 to 10.5, a sufficient alkalinity is provided for the adsorption of lithium ions by the adsorbent, so that the lithium ions can be fully adsorbed, and it is beneficial to preventing the dissolved loss problem of the adsorbent in the adsorption process to improve the service life of the adsorbent.

It should be understood that when sodium dihydrogen phosphate or disodium hydrogen phosphate is used as the phosphate salt, a small amount of hydrogen ions can be introduced into the lithium-containing slurry, so that the pH value of the pre-adsorption liquid obtained after the solid-liquid separation can reach 9.5 to 10.5 without adding an additional pH regulator, which prevents dilution of the concentration of lithium ions in the lithium-containing slurry. If other normal salts in the phosphate salts (such as sodium phosphate) are used, the pH value of the lithium-containing slurry would be relatively high, and an additional process of adjusting the pH value would be required, such as adding a pH adjuster (such as phosphoric acid, sulfuric acid, etc.) to the lithium-containing slurry, which will also lead to a decrease in the concentration of lithium ions.

As an example of this embodiment, after the solid-liquid separation treatment, the method further includes a step of washing the first solid material with a washing liquid. The washing liquid may be pure water, distilled water, ultra-pure water, deionized water, or a combination thereof. Furthermore, in the step of washing the first solid material with the washing liquid, the first solid material may be washed once or multiple times (such as twice, three times, four times, five times, etc.), and a volume of the washing liquid in each time of washing is at least twice the volume of the first solid material in order to remove soluble impurity ions in the first solid material.

As an example of this embodiment, after washing the obtained first solid material with the washing liquid, the method further includes a step of subjecting the washed first solid material to a drying treatment (e.g., oven-drying) in order to remove moisture from the washed first solid material.

In this example, the obtained first solid material is washed with the washing liquid to remove the impurity ions remaining on a surface of lithium phosphate, thereby further improving the purity of lithium phosphate in the first solid material. It has been experimentally verified that, in the present disclosure, after subjecting the first solid material obtained by the lithium precipitation treatment to the washing with the washing liquid and the oven-drying, the purity of the obtained lithium phosphate material reaches above 95% (by mass fraction), which satisfies an industrial-grade lithium phosphate standard. That is, the first solid material subjected to the washing and drying can be directly sold or returned to a production line to increase a concentration of lithium element in a leach liquor. For example, for a production line of lithium extraction from black powder of batteries, lithium phosphate can be returned to the lithium leaching process section of the battery powder recovery production line to increase the concentration of lithium element in the leach liquor. For a production line of lithium extraction from lithium ore, lithium phosphate can be returned to a calcination process section of phosphoric acid to increase the concentration of lithium element in the leach liquor.

As a further example of this embodiment, after the first solid material is subjected to the washing with pure water and oven drying treatment, the purity of lithium phosphate is above 95% (by mass fraction). For example, the purity of lithium phosphate may be 95%, 95.5%, 96%, 96.5%, 97%, 97.5%, 98%, 98.5%, or 99%, or the purity of lithium phosphate may be between any two of the above purities.

Step S4, adsorbing the lithium ions in the pre-adsorption liquid with an adsorbent to obtain a post-adsorption liquid.

It should be understood that the adsorbent should be selected from adsorbents that can adsorb lithium ions from a solution. As an example of this embodiment, the adsorbent includes a titanium-based adsorbent. As compared to an aluminum-based adsorbent that are not suitable for the alkaline solution and a manganese-based adsorbent that are not suitable for a solution containing sulfate ions, the titanium-based adsorbent has a relatively long service life and can ensure full adsorption of lithium ions.

As an example of this embodiment, the titanium-based adsorbent is selected from at least one of the following products: ANHUI YUXIANG UL-6, TOP FINE NEW MATERIALS G-100, TOP FINE NEW MATERIALS G-200, JIUWU HI-TECH JW-LTOS, HAIPU HP180, and HAIPU HPL900.

As an example of this embodiment, the adsorbent may be provided in a fixed bed or a continuous moving bed adsorption device, such that the pre-adsorption liquid can flow through the adsorbent, which facilitates the adsorption of the adsorbent to lithium ions in the pre-adsorption liquid.

As a further example of this embodiment, in the step of adsorbing lithium ions in the pre-adsorption liquid, an adsorption time can be controlled to be 3 h to 10 h. For example, the adsorption time can be controlled to be 3 h, 4 h, 5 h, 6 h, 7 h, 8 h, 9 h, or 10 h, or the adsorption time can be controlled to be between any two of the above times.

In this example, by controlling the adsorption time, it is beneficial to the full adsorption of lithium ions in the pre-adsorption liquid by the adsorbent.

It should be understood that in the process of adsorbing the lithium ions in the pre-adsorption liquid with the adsorbent, a flow rate of the pre-adsorption liquid can be adjusted according to the concentration of lithium ions in the pre-adsorption liquid to balance the recovery rate of lithium ions and the adsorption efficiency.

In this embodiment, most of lithium ions in the lithium-containing mother liquor are recovered due to the lithium precipitation treatment and the adsorption with the adsorbent that are sequentially performed, which is not only beneficial to fully recovering lithium ions, but also beneficial to obtaining a by-product with a high purity.

As an example of this embodiment, the concentration of lithium ions in the post-adsorption liquid is less than 20 ppm.

As an example of this embodiment, after adsorbing lithium ions in the pre-adsorption liquid with the adsorbent, the method further includes: subjecting the adsorbent to a desorption treatment with an acid solution.

In the embodiment, after subjecting the adsorbent to the desorption treatment with the acid solution, a lithium solution enriched with lithium ions is produced, which is beneficial to a further recovery and utilization of lithium element. The lithium solution can be introduced into a production line of lithium carbonate, or the lithium solution can be introduced into an evaporator for concentration to obtain a lithium-containing solid.

As a further example of this embodiment, during subjecting the adsorbent to the desorption treatment with the acid solution, the acid solution used contains a strong acid. Preferably, the acid solution is selected from dilute sulfuric acid, dilute hydrochloric acid, or a combination thereof. The dilute sulfuric acid or dilute hydrochloric acid is highly acidic, but is not an acid with a strong oxidizing property, which is beneficial to maintaining the service life of the adsorbent.

As a further example of this embodiment, a pH value of the acid solution used is 1.5 to 1.8. For example, the pH value of the acid solution used is 1.5, 1.55, 1.6, 1.65, 1.7, 1.75, or 1.8, or the pH value of the acid solution used may be between any two of the above pH values. The acid solution with the pH value in such range can ensure full desorption of lithium ions.

As a further example of this embodiment, during the desorption treatment, a temperature of the acid solution used is 40°C to 50°C. For example, the temperature of the acid solution used is 40 °C, 42 °C, 44 °C, 45 °C, 46 °C, 48 °C, or 50 °C, or the temperature of the acid solution used may be between any two of the above temperatures.

Step S5, subjecting the post-adsorption liquid to a concentration and crystallization treatment to obtain a second solid material.

It should be understood that after the pre-adsorption liquid is subjected to the adsorption with the adsorbent, the post-adsorption liquid is obtained, with lithium ions substantially removed from the post-adsorption liquid, and with cations from the phosphate salt solution and sulfate ions as main components of the post-adsorption liquid. Therefore, the second solid material produced after subjecting the post-adsorption liquid to the concentration and crystallization treatment contains the sulfate salt as the main component. In this embodiment, sodium ions and sulfate ions are main components in the post-adsorption liquid. During subjecting the post-adsorption liquid to the concentration and crystallization treatment. the second solid material is formed with sodium sulfate as the main component, i.e., sodium sulphate powder.

As an example of this embodiment, before subjecting the post-adsorption liquid to the concentration and crystallization treatment, the method further includes: adjusting a pH value of the post-adsorption liquid to 5.0 to 6.0.

In this embodiment, by adjusting the pH value of the post-adsorption liquid, it is beneficial to improving the purity of sodium sulfate in the second solid material.

As a further example of this embodiment, sulfuric acid can be used to adjust the pH value of the post-adsorption liquid. By using sulfuric acid to adjust the pH value of the post-adsorption liquid, the introduction of other impurity ions can be avoided, and it is also beneficial to improving the purity of sodium sulfate in the second solid material.

As an example of this embodiment, the step of subjecting the post-adsorption liquid to the concentration and crystallization treatment includes: sequentially subjecting the post-adsorption liquid to an evaporative concentration treatment and a freeze crystallization treatment to obtain the second solid material and a post-crystallization liquid; and subjecting the second solid material to a drying treatment (e.g., an oven-drying treatment) to obtain a sodium sulphate powder. In the evaporative concentration treatment, the post-adsorption liquid can be evaporated until a crystal is about to be precipitated. Thereafter, the post-adsorption liquid can be subjected to the freeze crystallization treatment.

By the evaporative concentration treatment and the freeze crystallization treatment sequentially performed, it is beneficial to improving the recovery rate of the sodium sulphate powder. In the evaporative concentration treatment, the post-adsorption liquid can be evaporated until a crystal is about to be precipitated. Thereafter, the post-adsorption liquid can be subjected to the freeze crystallization treatment.

As an example of this embodiment, the step of subjecting the post-adsorption liquid to the evaporative concentration treatment can be performed in an evaporator, and the step of subjecting the post-adsorption liquid to the cooling crystallization can be performed in a cooling crystallizer.

As an example of this embodiment, the purity of sodium sulfate in the obtained sodium sulphate powder is 99% or above (by mass fraction).

As an example of this embodiment, the content of lithium ions in the obtained sodium sulphate powder is lower than 50 ppm (by mass concentration).

As a further example of this embodiment, the method further includes: preparing the post-crystallization liquid into a phosphate salt solution which is reused in the step of mixing the lithium-containing mother liquor with the phosphate salt solution.

In this embodiment, lithium ions and sulfate ions have been substantially removed from the post-crystallization liquid, leaving primarily a small amount of phosphate ions in the post-crystallization liquid. Thus, recovering these phosphate ions for use in the phosphate salt solution is beneficial to the full utilization of phosphate ions without affecting the recovery rates of lithium ions and sulfate ions, thereby reducing the resource utilization costs.

As a further example of this embodiment, during preparing the post-crystallization liquid into the phosphate salt solution, a phosphate salt can be added to the post-crystallization liquid to prepare a saturated solution of phosphate ions.

As a further example of this embodiment, during preparing the post-crystallization liquid into the phosphate salt solution, a phosphate salt and phosphoric acid can be added to the post-crystallization liquid to prepare a saturated solution of sodium dihydrogen phosphate and/or disodium hydrogen phosphate.

It should be understood that through the above steps S1 to S5, the resource utilization method for the lithium-containing mother liquor of the present disclosure can be completed.

It has been experimentally verified that, in the resource utilization method for the lithium-containing mother liquor of in this embodiment, by firstly using the phosphate salt solution to initially recover lithium element in the lithium-containing mother liquor, about 80% of lithium can be recovered during the initial recovery process. Thereafter, the adsorbent is used to secondarily recover the 20% lithium remaining in the pre-adsorption liquid. These two recovery processes can achieve a recovery rate of 99% or above of lithium element in the lithium-containing mother liquor, resulting in full recovery of lithium element. The initial recovery process achieves the recovery of the majority of lithium element with a lower cost, while the secondary recovery achieves the full recovery of remaining lithium element with a higher cost. In comparison, for the methods of recovery using solely the phosphate salt solution and recovery using solely the adsorbent, the method of recovery using solely the phosphate salt solution face challenges such as low yield and difficulty recovering low concentration of lithium in the remaining liquid, and the method of recovery using solely the adsorbent faces challenges such as compatibility of different types of adsorbents with different systems, lower adsorption rate of lithium element, and higher costs due to the large amounts of adsorbent required. The resource utilization method can achieve the full recovery of lithium element while controlling the recovery cost at a low level. Additionally, since the recovery rate of lithium element achieved by using the resource utilization method for the lithium-containing mother liquor of the present disclosure can reach 99% or above, the content of lithium impurity in the post-adsorption liquid is extremely low, so that a by-product with a very high purity can be formed by further subjecting the post-adsorption liquid to the concentration and crystallization treatment, providing additional economic benefits.

Furthermore, the present disclosure also provides a resource utilization device for a lithium-containing mother liquor. The resource utilization device includes a lithium precipitation reactor, a solid-liquid separator, an adsorber, an evaporator, and a cooling crystallizer. An outlet port of the lithium precipitation reactor is connected to an inlet port of the solid-liquid separator. A solid outlet port of the solid-liquid separator is connected to an inlet port of a material collection container. A liquid outlet port of the solid-liquid separator is connected to an inlet port of the adsorber. The adsorber is provided with an adsorbent therein. An outlet port of the adsorber is connected to an inlet port of the evaporator. An outlet port of the evaporator is connected to an inlet port of the cooling crystallizer.

The resource utilization device for the lithium-containing mother liquor is used to implement the resource utilization method for the lithium-containing mother liquor as described in the above embodiments.

The lithium precipitation reactor is configured as a vessel for the lithium precipitation treatment performed after mixing the lithium-containing mother liquor with the phosphate salt solution. The solid-liquid separator is configured to perform the solid-liquid separation treatment on the lithium-containing slurry obtained after the lithium precipitation treatment, to obtain the pre-adsorption liquid and the first solid material. The adsorber is configured to adsorb lithium ions in the pre-adsorption liquid obtained after the solid-liquid separation treatment and discharge the post-adsorption liquid. The evaporator is configured to perform the evaporative concentration treatment on the post-adsorption liquid discharged from the adsorber. The cooling crystallizer is configured to perform the cooling crystallization treatment on the liquid discharged from the evaporator to obtain the second solid material.

As an example of this embodiment, phosphorus and lithium elements are enriched and concentrated in the post-crystallization liquid after the cooling crystallization treatment. The post-crystallization liquid can be mixed with a phosphate salt and water to prepare a phosphate salt solution which can be used for the lithium precipitation treatment, which is beneficial to achieving a high recovery rate of lithium and phosphorus elements and reducing an external-discharge loss.

As an example of this embodiment, the lithium precipitation reactor may include a reaction kettle.

As an example of this embodiment, depending on the actual separation methods, the solid-liquid separator may include a filter press, a centrifuge, a suction filter, or a sedimentation tank. In this embodiment, a plate-and-frame filter press may be used to separate the pre-adsorption liquid from the first solid material.

As an example of this embodiment, the adsorber may include a fixed bed adsorber or a moving bed adsorber. The adsorbent in the adsorber is selected from a titanium-based adsorbent.

The resource utilization system for the lithium-containing mother liquor can implement the resource utilization method for the lithium-containing mother liquor as described in the above embodiments.

The present disclosure will be further described in detail below in conjunction with specific examples. These examples should not be constructed as limiting the scope of protection of the present disclosure.

Unless otherwise defined, all technical terms used hereinafter have the same meanings as commonly understood by persons skilled in the art. The professional terms used herein are only for the purpose of describing specific examples and are not intended to limit the scope of protection of the present disclosure.

Some specific examples are listed below. It should be noted that the examples described below are illustrative and are only used to explain the present disclosure, and cannot be understood as limiting the present disclosure. If specific techniques or conditions are not indicated in the examples, the processes are carried out in accordance with the techniques or conditions described in literature in the art or in accordance with product instructions. The reagents or instruments for which no manufacturers are noted are all common products that can be purchased from the market.

### Example 1

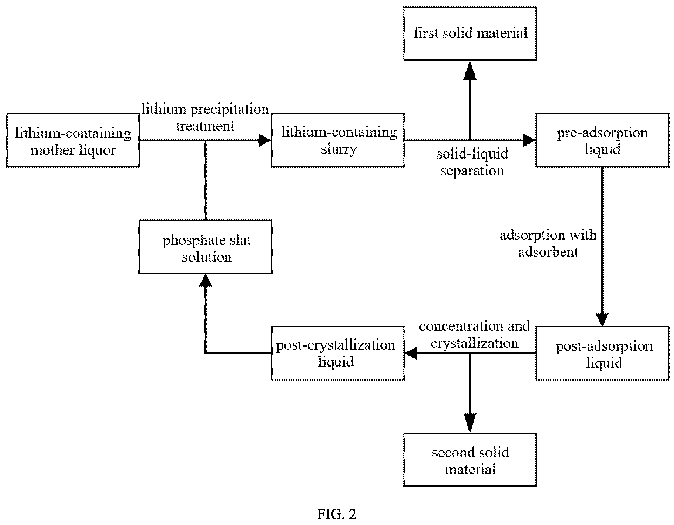

The process flow as shown in FIG. 2 was used for a resource utilization for a lithium-containing mother liquor, which is specifically described below.
(1) A solution obtained after the precipitation of lithium carbonate from a waste lithium iron phosphate battery (i.e., a lithium precipitation mother liquor), with a lithium concentration of 1600 ppm ± 150 ppm and a sulfate ion concentration of 80 g/L, was used as a lithium-containing mother liquor.
(2) A temperature of the lithium-containing mother liquor was controlled to be 92 °C. The lithium-containing mother liquor was gradually added to a prepared phosphate salt solution within 2 h. The phosphate salt solution was a saturated solution of sodium dihydrogen phosphate (NaH₂PO₄). An amount-of-substance ratio of lithium in the lithium-containing mother liquor to phosphate ions in the phosphate salt solution was 3:0.75. After the feeding was completed, the temperature was hold for 3 h. During the feeding and temperature-holding processes, an overall temperature of the mixed solution was maintained at 92 °C to fully precipitate lithium phosphate. After the reaction, a lithium-containing slurry was obtained.
(3) The lithium-containing slurry was filtered to separate a solid phase component from a liquid phase component therein, with the solid phase component used as a first solid material and the liquid phase component used as a pre-adsorption liquid. The first solid material was washed with pure water at a volume ratio of pure water to the first solid material of 3:1 for three times. Then the first solid material was oven-dried to obtain a lithium phosphate product.
(4) The pre-adsorption liquid obtained in step (3) was put into a fixed bed adsorption equipment filled with a titanium-based adsorbent (Anhui Yuxiang UL-6) for adsorbing lithium ions. The concentration of lithium in the pre-adsorption liquid was 450 ppm ± 50 ppm. A flow rate of the pre-adsorption liquid was controlled such that an adsorption time of the pre-adsorption liquid passing through the titanium-based adsorbent was 8 h. An outflowing liquid was collected as a post-adsorption liquid. A concentration of lithium ions in the post-adsorption liquid was less than 20 ppm. The titanium-based adsorbent was desorbed with a dilute sulfuric acid with a pH value of 1.6 at a temperature of 45 °C to obtain a lithium solution.
(5) After a pH value of the post-adsorption liquid obtained in step (4) was adjusted to 5.5, the post-adsorption liquid was subjected to an evaporative concentration treatment. When a crystal was about to be precipitated from the post-adsorption liquid, the post-adsorption liquid was subjected to a freeze crystallization treatment. The obtained crystal was oven-dried to obtain a sodium sulphate powder product.

### Example 2

Example 2 differs from Example 1 only in that: in step (1), a solution obtained after the precipitation of lithium carbonate during lithium extraction from lithium ore (i.e., the lithium precipitation mother liquor), with a lithium concentration of 2200 ppm ± 200 ppm and a sulfate ion concentration of 95 g/L, was used as the lithium-containing mother liquor.

### Example 3

Example 3 differs from Example 1 only in that: in step (1), a solution obtained after the precipitation of lithium carbonate during lithium extraction from lithium ore (i.e., the lithium precipitation mother liquor), with a lithium concentration of 1800 ppm ± 150 ppm and a sulfate ion concentration of 88 g/L, was used as the lithium-containing mother liquor.

### Example 4

Example 4 differs from Example 1 only in that: in step (1), a solution obtained after the precipitation of lithium carbonate during lithium extraction from lithium ore (i.e., the lithium precipitation mother liquor), with a lithium concentration of 2500 ppm ± 200 ppm and a sulfate ion concentration of 105 g/L, was used as the lithium-containing mother liquor.

### Example 5

Example 5 differs from Example 1 only in that: in step (2), the amount-of-substance ratio of lithium in the lithium-containing mother liquor to phosphate ions in the phosphate salt solution was 3:0.7.

### Example 6

Example 6 differs from Example 1 only in that: in step (2), the amount-of-substance ratio of lithium in the lithium-containing mother liquor to phosphate ions in the phosphate salt solution was 3:0.8.

### Example 7

Example 7 differs from Example 1 only in that: in step (2), the temperature of the lithium-containing mother liquor was controlled to be 95 °C, and the overall temperature of the mixed solution was maintained at 95 °C during the feeding process and the temperature-holding process.

### Example 8

Example 8 differs from Example 1 only in that: in step (2), the temperature of the lithium-containing mother liquor was controlled to be 90 °C, and the overall temperature of the mixed solution was maintained at 90 °C during the feeding process and the temperature-holding process.

### Example 9

Example 9 differs from Example 1 only in that: in step (2), the phosphate salt solution was a saturated solution of disodium hydrogen phosphate (Na₂HPO₄).

### Example 10

Example 10 differs from Example 1 only in that: in step (2), the prepared phosphate salt solution was gradually added to the lithium-containing mother liquor within 2 h.

### Example 11

Example 11 differs from Example 1 only in that: in step (2), the lithium-containing mother liquor was gradually added to the prepared phosphate salt solution within 0.1 h.

### Example 12

Example 12 differs from Example 1 only in that: in step (2), the lithium-containing mother liquor was gradually added to the prepared phosphate salt solution within 0.5 h.

### Example 13

Example 13 differs from Example 1 only in that: in step (2), the lithium-containing mother liquor was gradually added to the prepared phosphate salt solution within 4 h.

### Example 14

Example 14 differs from Example 1 only in that: in step (2), the temperature was maintained for 1.5 h after the feeding was completed.

### Example 15

Example 15 differs from Example 1 only in that: in step (4), the titanium-based adsorbent was desorbed with dilute sulfuric acid with a pH value of 1.8 at a temperature of 50 °C.

### Example 16

Example 16 differs from Example 1 only in that: in step (4), the titanium-based adsorbent was desorbed with dilute sulfuric acid with a pH value of 1.5 at a temperature of 40 °C.

### Example 17

Example 17 differs from Example 1 only in that: in step (4), the flow rate of the pre-adsorption liquid was controlled such that the adsorption time of the pre-adsorption liquid passing through the titanium-based adsorbent was 10 h.

### Example 18

Example 18 differs from Example 1 only in that: in step (4), the flow rate of the pre-adsorption liquid was controlled such that the adsorption time of the pre-adsorption liquid passing through the titanium-based adsorbent was 3 h.

### Comparative Example 1

(1) A solution obtained after the precipitation of lithium carbonate from a waste lithium iron phosphate battery (i.e., a lithium precipitation mother liquor), with a lithium concentration of 1600 ppm + 200 ppm, was used as a lithium-containing mother liquor.
(2) The lithium-containing mother liquor in step (1) was added to a fixed bed adsorption device filled with a titanium-based adsorbent for adsorbing lithium ions. A flow rate of the pre-adsorption liquid was controlled such that an adsorption time of the pre-adsorption liquid passing through the titanium-based adsorbent was 8 h. An outflowing liquid was collected as a post-adsorption liquid. The pH value of the post-adsorption liquid was 6.5. The concentration of lithium ions in the post-adsorption liquid was 160 ppm + 50 ppm. The titanium-based adsorbent was desorbed with dilute sulfuric acid with a pH value of 1.6 at a temperature of 45 °C to obtain a lithium solution.

### Comparative Example 2

Comparative Example 2 differs from Comparative Example 1 in that:
(2) The temperature of the lithium-containing mother liquor was controlled at 92 °C. The solid sodium phosphate was gradually added to the lithium-containing mother liquor within 2 h. The amount-of substance ratio of lithium in the lithium-containing mother liquor to phosphate ions in the solid sodium phosphate was 3:0.75. After the feeding was completed, the temperature was held for 3 h. During the feeding and temperature-holding processes, the overall temperature of the mixed solution was maintained at 92 °C to fully precipitate lithium phosphate. After the reaction, the lithium-containing slurry was obtained.

### Comparative Example 3

Comparative Example 3 differs from Comparative Example 2 only in that: in (2), solid sodium dihydrogen phosphate was gradually added to the lithium-containing mother liquor within 2 h.

### Comparative Example 4

Comparative Example 4 differs from Example 1 in that:
In (2), the amount-of-substance ratio of lithium in the lithium-containing mother liquor to phosphate ions in the phosphate salt solution was 3:1.1.

### Comparative Example 5

Comparative Example 5 differs from Example 1 in that:
In (2), the amount-of-substance ratio of lithium in the lithium-containing mother liquor to phosphate ions in the phosphate salt solution was 3:0.6.

### Performance Test

1. The content of lithium phosphate and the content of various impurity elements in the lithium phosphate products prepared in step (3) of the above Examples 1 to 18 and prepared in the Comparative Examples 2 to 5 were tested by the inductively coupled plasma mass spectrometry (ICP-MS). The results are shown in Table 1.
2. The contents of various elements in the lithium solutions obtained in step (4) of the above Examples 1 to 18 and in the lithium solutions prepared in Comparative Examples 1, 4, and 5 were tested by the inductively coupled plasma mass spectrometry. The results are shown in Table 2.
3. The content of sodium sulfate and the content of various impurity elements in the sodium sulphate powder obtained in step (5) of the above Examples 1 to 18 and in the sodium sulphate powder prepared in Comparative Examples 4 and 5 were tested by the inductively coupled plasma mass spectrometry. The results are shown in Table 3.

**Table 1**

| | Mass fraction of lithium phosphate | Ca (ppm) | Mg (ppm) | Cl (ppm) | Si (ppm) | Zn (ppm) | Na (ppm) | SO₄²-(ppm) |
|---|---|---|---|---|---|---|---|---|
| Example 1 | 95.2% | 29.6 | 5.8 | 5.3 | 4.3 | 4.7 | 10315 | 7303 |
| Example 2 | 95.6% | 24.2 | 8.2 | ND | ND | 1.3 | 9835 | 7394 |
| Example 3 | 95.8% | 17.8 | 6.4 | ND | ND | ND | 9793 | 7226 |
| Example 4 | 95.6% | 27.9 | 9.3 | ND | 3.6 | 4.2 | 10032 | 7268 |
| Example 5 | 95.1% | 25.8 | 9.3 | ND | ND | 1.6 | 10118 | 7442 |
| Example 6 | 95.2% | 33.5 | 10.2 | 7.2 | 5.1 | 2.6 | 10384 | 7332 |
| Example 7 | 95.3% | 22.6 | 9.3 | ND | 4.6 | 1.6 | 10118 | 7442 |
| Example 8 | 95.2% | 19.8 | 6.2 | 8.7 | ND | 2.5 | 10287 | 7271 |
| Example 9 | 95.4% | 27.8 | 7.1 | ND | 6.1 | 3.5 | 10211 | 7393 |
| Example 10 | 95.0% | 29.3 | 10.3 | ND | ND | 1.6 | 10395 | 7491 |
| Example 11 | 95.1% | 24.6 | 8.3 | ND | ND | 1.6 | 10136 | 7483 |
| Example 12 | 95.6% | 27.9 | 7.2 | ND | 3.6 | 4.2 | 10006 | 7221 |
| Example 13 | 95.8% | 17.8 | 6.4 | ND | ND | ND | 9765 | 7219 |
| Example 14 | 95.2% | 16.4 | 6.3 | 4.9 | 5.7 | 6.4 | 10381 | 7333 |
| Example 15 | 95.3% | 19.4 | ND | 2.9 | 4.7 | ND | 10363 | 7315 |
| Example 16 | 95.1% | 20.5 | 4.3 | ND | 6.4 | 3.6 | 10452 | 7299 |
| Example 17 | 95.2% | 23.8 | 3.5 | 4.6 | 7.2 | 4.6 | 10415 | 7501 |
| Example 18 | 95.2% | 28.2 | 6.1 | 5.1 | 4.2 | 5.8 | 10397 | 7393 |
| Comparative Example 1 | / | / | / | / | / | / | / | / |
| Comparative Example 2 | 80.7 | 21.5 | 9.5 | 6.3 | 6.8 | 3.2 | 39360 | 27034 |
| Comparative Example 3 | 89.1 | 26.1 | 8.2 | 5.2 | 3.2 | ND | 21103 | 13933 |
| Comparative Example 4 | 92.7 | 18.4 | 8.9 | 5.1 | 3.4 | ND | 15057 | 10372 |
| Comparative Example 5 | 95.2 | 19.4 | 7.2 | 5.1 | 3.8 | 5.3 | 10401 | 7303 |

As can be seen from the results in Table 1, in the lithium phosphate products obtained in Examples 1 to 18, the mass fractions of lithium phosphates are relatively high, all reaching 95% or above, while contents of the impurities such as Ca, Mg, Cl, Si, Zn, Na, and SO₄²⁻ are relatively low, suggesting that the resource utilization method for the lithium-containing mother liquor provided in the present disclosure, wherein the lithium-containing mother liquor was firstly mixed with the phosphate salt solution followed by the lithium precipitation treatment, with the feeding ratio of lithium ions to phosphate ions was controlled to be 3: (0.7 to 0.8) during the mixing, and then lithium ions in the pre-adsorption liquid was adsorbed with the titanium-based adsorbent, achieves the recovery of lithium ions of 99% or above from the lithium-containing mother liquor.

In Comparative Example 1, the titanium-based adsorbent is directly used for the recovery from the lithium-containing mother liquor having a high concentration of lithium element. When the titanium-based adsorbent is directly used for adsorption from the lithium-containing mother liquor, the adsorption process using the titanium-based adsorbent involves the substitution of hydrogen ions in the titanate molecules with lithium ions, necessitating the consumption of alkalinity in the solution. However, the alkalinity in the lithium-containing mother liquor is limited and insufficient to support the required adsorption of lithium ions by the adsorbent. As a result, when the alkalinity in the post-adsorption liquid was inadequate, the lithium ions are unable to be adsorbed, leading to a significant amount of lithium element remained unadsorbed and unrecovered, and resulting in a lithium recovery rate of approximately 90%. Additionally, the titanium-based adsorbent is costly. The amount of the adsorbent required for direct adsorption would increase by more than five times, resulting in a corresponding fivefold increase in equipment scale. This high equipment investment contributes to elevated resource utilization costs for the lithium-containing mother liquor, reaching approximately 30,000 RMB per ton of lithium carbonate.

In Comparative Example 2, solid sodium phosphate is used to recover lithium phosphate. When solid sodium phosphate was used as a lithium recovery agent, the relatively low solubility of the sodium phosphate results in a serious peritectic phenomenon so that lithium phosphate covers sodium phosphate, leading to a relatively low purity of the lithium phosphate product, which is only 80.7%.

In Comparative Example 3 wherein solid sodium dihydrogen phosphate is added to the lithium-containing mother liquor, the generated solid lithium phosphate encapsulates sodium ions in the crystals, also leading to a serious peritectic phenomenon and a relatively low purity of the lithium phosphate product, which is only 89.7%.

In Comparative Example 4, as the amount-of-substance ratio of lithium element in the lithium-containing mother liquor to phosphate ion in the phosphate salt solution is 3:1.1, there is a very limited effect on the improvement of recovery rate of the lithium ions. Not only the material cost is increased, but also excessive amount of phosphate ions is introduced into the solution, which is not beneficial to the purity of the obtained material in the subsequent concentration and crystallization step.

In Comparative Example 5 wherein the amount-of-substance ratio of lithium in the lithium-containing mother liquor to phosphate ions in the phosphate salt solution is 3:0.6, the yield of the lithium phosphate product is relatively low, and the concentration of lithium ions in the lithium-containing slurry is relatively high, which are not beneficial to fully adsorbing lithium ions in the subsequent steps.

**Table 2**

| | Li(ppm) | Ti(ppm) | Fe(ppm) | Ca(ppm) | Mg(ppm) |
|---|---|---|---|---|---|
| Example 1 | 7409 | 2.09 | 0.07 | 0.32 | 0.25 |
| Example 2 | 7577 | 1.74 | 0.14 | 0.47 | 0.29 |
| Example 3 | 5264 | 1.67 | 0.35 | 0.45 | 0.39 |
| Example 4 | 9094 | 2.07 | 0.29 | 0.27 | 0.27 |
| Example 5 | 5747 | 1.03 | 0.01 | 0.38 | 0.13 |
| Example 6 | 7476 | 1.85 | 0.12 | 0.21 | 0.17 |
| Example 7 | 5398 | 1.33 | 0.46 | 0.12 | 0.45 |
| Example 8 | 7484 | 1.08 | 0.19 | 0.24 | 0.41 |
| Example 9 | 8555 | 1.75 | 0.29 | 0.20 | 0.19 |
| Example 10 | 8605 | 2.19 | 0.08 | 0.18 | 0.07 |
| Example 11 | 8852 | 1.43 | 0.34 | 0.39 | 0.37 |
| Example 12 | 6211 | 1.93 | 0.49 | 0.31 | 0.34 |
| Example 13 | 8583 | 1.63 | 0.36 | 0.19 | 0.09 |
| Example 14 | 7940 | 1.65 | 0.47 | 0.06 | 0.34 |
| Example 15 | 5552 | 1.58 | 0.39 | 0.01 | 0.39 |
| Example 16 | 9312 | 2.19 | 0.19 | 0.40 | 0.12 |
| Example 17 | 6185 | 1.15 | 0.08 | 0.50 | 0.18 |
| Example 18 | 8314 | 1.51 | 0.23 | 0.43 | 0.29 |
| Comparative Example 1 | 6611 | 1.43 | 0.83 | 0.82 | 0.21 |
| Comparative Example 4 | 8403 | 2.03 | 0.68 | 0.39 | 0.33 |
| Comparative Example 5 | 5892 | 1.39 | 0.53 | 0.38 | 0.50 |

**Table 3**

| | Li(ppm) | Ti(ppm) | Fe(ppm) | Ca(ppm) | Mg(ppm) | Mass fraction of sodium sulfate |
|---|---|---|---|---|---|---|
| Example 1 | 78.3 | 0.7 | 0.2 | 0.24 | 0.63 | 99.41% |
| Example 2 | 95.8 | 2.5 | 1.2 | 0.46 | 0.04 | 99.33% |
| Example 3 | 66.4 | 2.1 | 1.1 | 0.87 | 0.97 | 99.13% |
| Example 4 | 72.4 | 2.5 | 0.2 | 0.84 | 0.99 | 99.32% |
| Example 5 | 113.6 | 1.9 | 0.2 | 0.42 | 0.16 | 99.43% |
| Example 6 | 83.5 | 2.0 | 0.4 | 0.68 | 0.62 | 99.39% |
| Example 7 | 86.3 | 1.3 | 1.7 | 0.68 | 0.48 | 99.49% |
| Example 8 | 81.9 | 1.6 | 1.3 | 0.14 | 0.74 | 99.27% |
| Example 9 | 84.3 | 0.7 | 1.5 | 0.97 | 0.72 | 99.21% |
| Example 10 | 94.4 | 2.9 | 1.7 | 0.02 | 0.61 | 99.40% |
| Example 11 | 92.7 | 1.7 | 1.3 | 0.31 | 0.16 | 99.21% |
| Example 12 | 103.6 | 2.0 | 0.6 | 0.86 | 0.37 | 99.34% |
| Example 13 | 113.8 | 2.6 | 1.9 | 0.48 | 0.86 | 99.16% |
| Example 14 | 92.7 | 2.7 | 0.6 | 0.05 | 1.00 | 99.38% |
| Example 15 | 90.7 | 1.3 | 0.2 | 0.67 | 0.88 | 99.30% |
| Example 16 | 108.6 | 1.8 | 1.3 | 0.71 | 0.69 | 99.57% |
| Example 17 | 90.9 | 2.8 | 0.0 | 0.11 | 0.04 | 99.27% |
| Example 18 | 71.1 | 2.6 | 0.3 | 0.57 | 0.31 | 99.44% |
| Comparative Example 4 | 85.3 | 3.1 | 1.5 | 0.82 | 0.72 | 96.52% |
| Comparative Example 5 | 76.5 | 2.9 | 2.0 | 0.95 | 0.37 | 99.40% |

As can be seen from the results in Table 2, in the resource utilization method for the lithium-containing mother liquor provided in the present disclosure, by adsorbing lithium ions in the pre-adsorption liquid and subjecting the adsorbent to the desorption treatment with the acid solution, with the adsorption time controlled to be 3 h to 10 h, the pH value of the acid solution for desorption controlled to be 1.5 to 1.8, and the temperature of the acid solution for desorption controlled to be 40 °C to 50 °C, the lithium solution enriched in lithium ions with with low content of other metal elements is obtained, thereby achieving a further recovery and utilization of lithium elements.

As can be seen from the results in Table 3, in the resource utilization method for the lithium-containing mother liquor provided in the present disclosure, by subjecting the post-adsorption liquid to the concentration and the crystallization treatment, the sodium sulphate powder with a purity between 99.13% and 99.57% is obtained, achieving full resource utilization for the post-adsorption liquid and providing additional economic benefits.

It should be noted that the present disclosure is not limited to the foregoing embodiments. The foregoing embodiments are merely examples, and embodiments having substantially the same configurations and effects as those of the technical conceptions within the scope of the present disclosure are all included in the technical scope of the present disclosure. In addition, various modifications that can be conceived by those skilled in the art may be made to the embodiments without departing from the spirit and scope of the present disclosure, and other embodiments that are constructed by combining some of the components in the embodiments are also included in the scope of the present disclosure.

## Claims

1. A resource utilization method for a lithium-containing mother liquor, comprising the following steps:
providing a lithium-containing mother liquor containing lithium ions and sulfate ions;
mixing the lithium-containing mother liquor with a phosphate salt solution followed by a lithium precipitation treatment to obtain a lithium-containing slurry;
subjecting the lithium-containing slurry to a solid-liquid separation treatment to obtain a pre-adsorption liquid and a first solid material;
adsorbing the lithium ions in the pre-adsorption liquid with an adsorbent to obtain a post-adsorption liquid; and
subjecting the post-adsorption liquid to a concentration and crystallization treatment to obtain a second solid material;
wherein an amount-of-substance ratio of the lithium ions in the lithium-containing mother liquor to phosphate ions in the phosphate salt solution is 3:(0.7 to 0.8).

2. The resource utilization method for the lithium-containing mother liquor according to claim 1, wherein during mixing the lithium-containing mother liquor with the phosphate salt solution, the lithium-containing mother liquor is added to the phosphate salt solution; and/or
the lithium-containing mother liquor is added to the phosphate salt solution within 0.5 h to 4 h.

3. The resource utilization method for the lithium-containing mother liquor according to claim 2, wherein the phosphate salt in the phosphate salt solution comprises sodium dihydrogen phosphate, disodium hydrogen phosphate, or a combination thereof; and/or,
the phosphate salt solution is a saturated solution of the phosphate ions; and/or,
after the solid-liquid separation treatment, the method further comprises a step of washing the first solid material with a washing liquid.

4. The resource utilization method for the lithium-containing mother liquor according to claim 3, wherein before mixing the lithium-containing mother liquor with the phosphate salt solution, the lithium-containing mother liquor is heated to 80 °C to 100 °C; and/or,
a temperature of the lithium precipitation treatment is 80 °C to 100 °C, and a temperature-holding time of the lithium precipitation treatment is 2 h to 4 h.

5. The resource utilization method for the lithium-containing mother liquor according to any one of claims 1 to 4, wherein a pH value of the pre-adsorption liquid is 9.5 to 10.5; and/or,
a concentration of lithium ions in the pre-adsorption liquid is 200 ppm to 500 ppm, and a concentration of lithium ions in the post-adsorption liquid is less than 20 ppm.

6. The resource utilization method for the lithium-containing mother liquor according to any one of claims 1 to 4, wherein the adsorbent comprises a titanium-based adsorbent, and after adsorbing lithium ions in the pre-adsorption liquid with the adsorbent, the method further comprises: subjecting the adsorbent to a desorption treatment with an acid solution.

7. The resource utilization method for the lithium-containing mother liquor according to any one of claims 1 to 4, wherein the phosphate salt solution contains sodium ions, and before subjecting the post-adsorption liquid to the concentration and crystallization treatment, the method further comprises: adjusting a pH value of the post-adsorption liquid to 5.0 to 6.0;
the step of subjecting the post-adsorption liquid to the concentration and crystallization treatment comprises: sequentially subjecting the post-adsorption liquid to an evaporative concentration treatment and a freeze crystallization treatment to obtain the second solid material and a post-crystallization liquid; and subjecting the second solid material to a drying treatment to obtain a sodium sulphate powder.

8. The resource utilization method for the lithium-containing mother liquor according to claim 7, wherein the method further comprises: preparing the post-crystallization liquid into a phosphate salt solution which is reused in the step of mixing the lithium-containing mother liquor with the phosphate salt solution.

9. The resource utilization method for the lithium-containing mother liquor according to any one of claims 1 to 4, wherein a concentration of lithium ions in the lithium-containing mother liquor is 1450 ppm to 2700 ppm; and/or,
the lithium-containing mother liquor is selected from a lithium precipitation mother liquor derived from a waste lithium iron phosphate battery or a lithium precipitation mother liquor produced by a lithium extraction from a lithium ore.

10. A resource utilization device for a lithium-containing mother liquor, comprises: a lithium precipitation reactor, a solid-liquid separator, an adsorber, an evaporator, and a cooling crystallizer; wherein an outlet port of the lithium precipitation reactor is connected to an inlet port of the solid-liquid separator, an outlet port of the solid-liquid separator is connected to an inlet port of the adsorber, the adsorber is provided with an adsorbent therein, an outlet port of the adsorber is connected to an inlet port of the evaporator, and an outlet port of the evaporator is connected to an inlet port of the cooling crystallizer.
